Europäisches Patentamt

(19) European Patent Office

Office européen des brevets

(11) Publication number: **0 121 476**
**B1**

(12) **EUROPEAN PATENT SPECIFICATION**

(45) Date of publication of patent specification: **29.06.88**

(21) Application number: **84400638.7**

(22) Date of filing: **29.03.84**

(51) Int. Cl.⁴: **C 04 B 35/58, C 25 C 3/08**

(54) Aluminum-resistant titanium diboride articles and method of making same.

(30) Priority: **30.03.83 US 480516**

(43) Date of publication of application:
**10.10.84 Bulletin 84/41**

(45) Publication of the grant of the patent:
**29.06.88 Bulletin 88/26**

(84) Designated Contracting States:
**CH DE FR GB IT LI NL**

(56) References cited:
**EP-A-0 073 743**
**FR-A-2 026 662**
**GB-A-1 010 492**
**LU-A- 55 395**
**US-A-2 984 807**
**US-A-3 316 062**
**US-A-4 097 567**

(73) Proprietor: **UNION CARBIDE CORPORATION**
**39 Old Ridgebury Road**
**Danbury Connecticut 06817 (US)**

(72) Inventor: **Parrish, Lien Nguyen**
**6110 Creekhaven Drive**
**Parma Heights, Ohio (US)**

(74) Representative: **Santarelli, Marc et al**
**Cabinet Rinuy et Santarelli 14, avenue de la**
**Grande Armée**
**F-75017 Paris (FR)**

Courier Press, Leamington Spa, England.

**Description**

Field of the invention

This invention relates generally to shaped titanium diboride ($TiB_2$) articles and more particularly to shapes suitable for use in Hall cells due to their improved resistance to attack by aluminum.

Aluminum metal is commonly obtained from cryolite or bauxite by their electrolysis in a Hall cell.

The aluminum industry has been developing improvements in the Hall cell over the years. Baffles and other devices are used in the pool of molten aluminum employed in Hall cells to reduce or eliminate waves or other disruptions in the surface. These disruptions are caused by eddy currents and other effects, both physical and electromagnetic, in the bath. The smoother interface thus produced allows for a reduced gap between the anode and the cathode, resulting in lower power costs.

The material of construction to be used in the aluminum-wetted portions of the cell must be electrically conductive, mechanically strong, thermally and chemically stable in the Hall cell environment, and resistant to thermal shock. Theoretically, $TiB_2$ is a suitable material, but tests have shown that the material as commercially manufactured lacks stability in the Hall cell environment. The aluminum-wetted portions of the cell are the bottom and walls of the cell and any protrusions or inlays in or on the cell bottom, which is the cathodic contact to the molten aluminum.

Statement of the prior art

The use of $TiB_2$ tiles in aluminum reduction cells is discussed in U.S. Patents Nos. 4,231,853 and 4,341,611; in both of these patents, the process for making the tiles is described as a hot-pression operation and no mention is made of the damaging cubic phase contaminants addressed by the present invention.

Purification of $TiB_2$ powder by mixing the powder with a boron-supplying compound, such as BN, and heating the mixture in a crucible to remove the cubic phase composed of borides, oxides, nitrides, and carbides by reaction with boron is taught in U.S. Patent No. 3,316,062, but the patent is directed to powders and does not teach the purification of formed bodies. Undesirable contamination may be introduced during the forming and sintering operations, even if powders purified by following this prior art are used.

Objects and summary of the invention

The principal object of this invention is to provide an article of the disclosed type which combines simplicity, strength and durability in a high degree together with inexpensiveness of construction and a method of making the same.

Other objects of the invention will in part be obvious and in part hereinafter pointed out.

The method according to the present invention for making a shaped $TiB_2$ article essentially free of TiO, TiN and TiC cubic phase impurities comprises forming said article from finely divided $TiB_2$ containing at least one of said impurities and a sintering aid and sintering said article between about 1,600°C and about 2,100°C, and it is characterized in that said sintered article is annealed in a BN pack between about 1,700°C and about 1,900°C thereby reacting said impurities with said pack so that essentially none of said impurities is present in said article after annealing.

Brief description of the drawings

Fig. 1 is a flow diagram illustrating the method of the invention.

Figs. 2a, 2b, 2c, and 2d are a group of scanning electron microscope (SEM) photos enlarged 5,000 and 20,000 times showing the microstructures of sintered $TiB_2$ shapes not following this invention after 28 and 72 hours in contact with molten aluminum.

Figs. 3a and 3b are a pair of photomicrographs enlarged 2,000 and 5,000 times and showing the microstructures of $TiB_2$ articles sintered and annealed according to this invention after 100 hours in contact with molten aluminum.

Fig. 4 is a graph, the curve of which shows the flexural strength of $TiB_2$ at 25°C versus the sinter temperature that demonstrates the criticality of sinter temperature whether this invention is used or not. The data shown were obtained while not using any form of the present invention.

Fig. 5 is a graph, the curve of which shows the electrical resistivity of $TiB_2$ at 25°C versus sinter temperature. The data shown were obtained while not using any form of the present invention.

Detailed description of the invention

The present invention is based on the unexpected and unobvious discoveries that:

(i) failure in the use of $TiB_2$ structures in the Hall cells was due to the presence therein of separate phase consisting of cubic crystals of titanium carbide (TiC), titanium nitride (TiN), titanium oxide (TiO), or mixtures thereof.

(ii) there is a best sintering temperature; and

(iii) a formed and sintered $TiB_2$ article can be purified by a thermal treatment in a BN pack.

The articles of the invention can be made by annealing at high temperature in a boron nitride (BN) pack a sintered article containing the harmful impurities. The impurities are converted to $TiB_2$ in situ, but the annealing operation causes an unavoidable loss in strength. It has been discovered that the initial sintering temperature of the $TiB_2$ article should be 2000°C±25°C for maximum strength of the finished product. In practice, however, a product can be made at initial sintering temperatures ranging from about 1600°C to about 2100°C if strength and conductivity can be sacrificed.

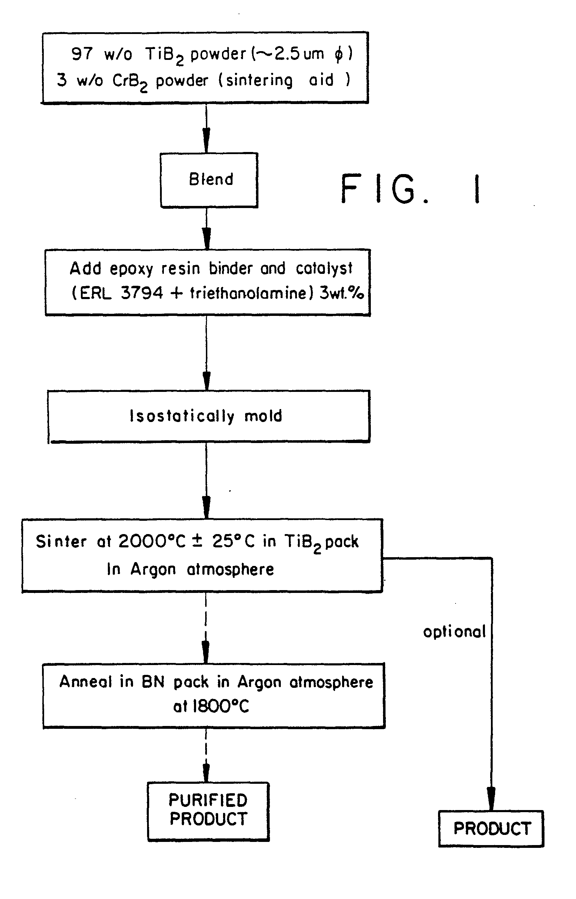

Referring to the flow diagram of Fig. 1, the method of the invention comprises mixing from about 96.5 to about 97.5 weight percent of $TiB_2$ powder, preferably having a particle size ranging from about 2.5 to about 3.0 microns with from about 2.0 to about 3.5 weight percent of a sintering aid such as chromium diboride; adding to the resulting blend an amount of from about 2.9 to about 3.0 of an epoxy binder and a catalyst such as triethanolamine, isostatically molding the mixture, followed by sintering at 2000°C±25°C in a particle pack comprising sintered crushed $TiB_2$ under an inert atmosphere, suitably argon, or high vacuum (pressures below about $5\times10^{-3}$ Torr) with argon under high vacuum preferred.

In the embodiment of Fig. 1, the shape is annealed at about 1800°C to remove the impurities.

Thus it will be seen that the sintered articles of the invention can be annealed at 1800°C in a BN pack in an argon atmosphere, to convert any oxide, nitride, and carbide of titanium to the diboride ($TiB_2$). In practice, one may use annealing temperatures in the range of about 1700 to 1900°C with 1800°C being the optimum. The loss of strength associated with this annealing process amplifies the need for maximizing the strength during sintering.

In accordance with the foregoing, a $TiB_2$ shape was developed by changing the sintering temperature to improve the structure. The physical properties are shown in Table I, where a material made by using the reduced sintering temperature of this invention is compared with a prior art material that is the same except for sintering temperature.

TABLE I

Comparative values of physical properties

| Physical properties | Made by prior art | Made by using the sintering temperature of this invention | Change |
|---|---|---|---|
| 1. Flexural strength | | | |
| a) 25°C | 192 MPa | 413 MPa | 115% higher |
| b) 1000°C | 103 MPa | 148 MPa | 44% higher |
| 2. Sonic modulus (GPa), 25°C | 528 | 700 | 32% higher |
| 3. Electrical resistivity (μΩm), 25°C | 0.60 | 0.18 | 70% less |
| 4. Density, % of theoretical | 94.9 | 94.6 | — |
| 5. Coefficient of thermal expansion $(°C)^{-1}\times10^{-6}$ | 8.2 | 7.8 | 5% lower |
| 6. Micro cracks | Some | None | Improved |

From Table I, it can be seen that strength is improved dramatically and microcracks are eliminated. The improved strength results in greater resistance to thermal shock, a property that is essential in the Hall cell application. Thermal shock tests to 675°C at 150°/minute and to 810°C at 210°C/minute showed no cracking due to thermal shock.

An added advantage can be gained by removing impurities from the $TiB_2$. The common impurities are TiO, TiN, and TiC. When the $TiB_2$ with these impurities is exposed to molten aluminum, aluminum oxide, aluminum nitride, and aluminum carbide are formed. The crystal size for these reaction products is larger than the titanium compounds so the structure of the $TiB_2$ body is disrupted and microcracks form. This is believed to be the principal mechanism of aluminum penetration and attack.

The subject invention is further illustrated in a nonlimiting fashion by the following example.

Example

Purification by annealing

Ninety-seven grams of $TiB_2$ powder (98.4% pure) was ball-milled with 3 g $CrB_2$ powder (99.5% pure) for 96 hours or until the particle size of the combination was 2.5 μm or finer, as measured on a Fisher Sub-Sieve Sizer. The ball-milled powder was mixed in a Hobart mixer with a solution of 33 cm$^3$ acetone, 3 g

3

0 121 476

Epoxy ERL 3794 (an epoxy resin product of Union Carbide Corporation) and 0.3 g triethanolamine until all the acetone evaporated. The mix was dried in an oven at 65.6°C overnight and then micro-milled (i.e., milled using a swing-hammer mill) to break agglomerates. The micro-milled powder was then isostatically molded into testing shapes, cured in sand to 185°C in 24 hours in a conventional oven and then sintered in an induction vacuum furnace at 2000°C in 2 hours under an argon flow rate of 170 dm³/h (6 SCFH). The shapes were sintered in sintered crushed $TiB_2$ pack to support the shapes to keep them from warping and to provide a uniform atmosphere. The sintered shapes had densities equivalent to 98% of the theoretical value. Finally, the testing shapes were annealed in a resistance heated tube furnace at 1800°C in 2 hours under an argon flow rate of 142 dm³/h (5 SCFH). The shapes were packed entirely in BN powder pack in a BN tube for the annealing process.

Ten $TiB_2$ samples (25.4 mm×6.35 mm×6.35 mm) sintered to 2000°C in two hours and ten samples (25.4 mm×6.35 mm×6.35 mm) sintered to 2000°C in two hours followed by annealing to 1800°C for two hours were evaluated in molten aluminum under the electrolytic action of a Hall cell. The samples were immersed in molten aluminum as described in Table II:

TABLE II

| No. of samples | Process | Hrs. in molten aluminum |
|---|---|---|
| 4 | Sintered | 75* |
| 6 | Sintered | 28 |
| 8 | Sintered & annealed | 100 |

*These four samples were immersed in molten aluminum for 28 hours at first; they were removed and exposed to molten aluminum again for another 47 hours.

The samples that were exposed to aluminum were each soaked in 100 cm³ of a solution made up of 50 vol. % concentrated hydrochloric acid and 50 vol. % deionized water for 24 hours to dissolve aluminum from the surface that might affect the results of the measurement of physical properties of the samples. The physical properties of the tested samples are listed in Table III:

TABLE III

| Samples | Density percent of theoretical | Flexural strength (MPa) | | | Sonic modulus (GPa) |
|---|---|---|---|---|---|
| | | Room temp. | 1000°C | Resist. (μΩm) | |
| Sintered | 94.7 | 322 | 133 | 0.25 | 533 |
| Sintered and annealed in BN pack | 93.3 | 284 | 173 | 0.25 | 518 |

As can be seen from Table III, the annealing process reduces flexural strength somewhat. As this appears to be unavoidable, it is all the more important that the optimum sintering temperature have been used in making the sample to be annealed in BN pack for purification.

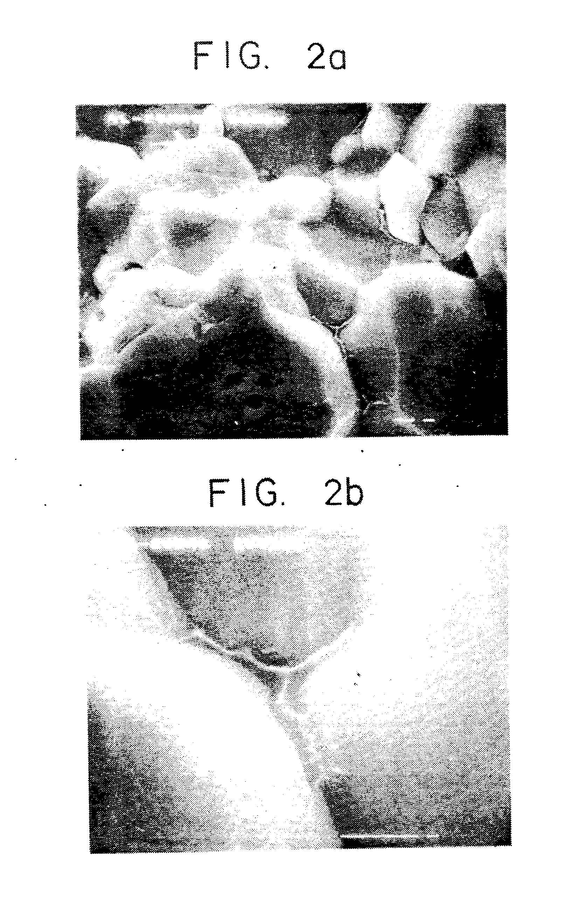

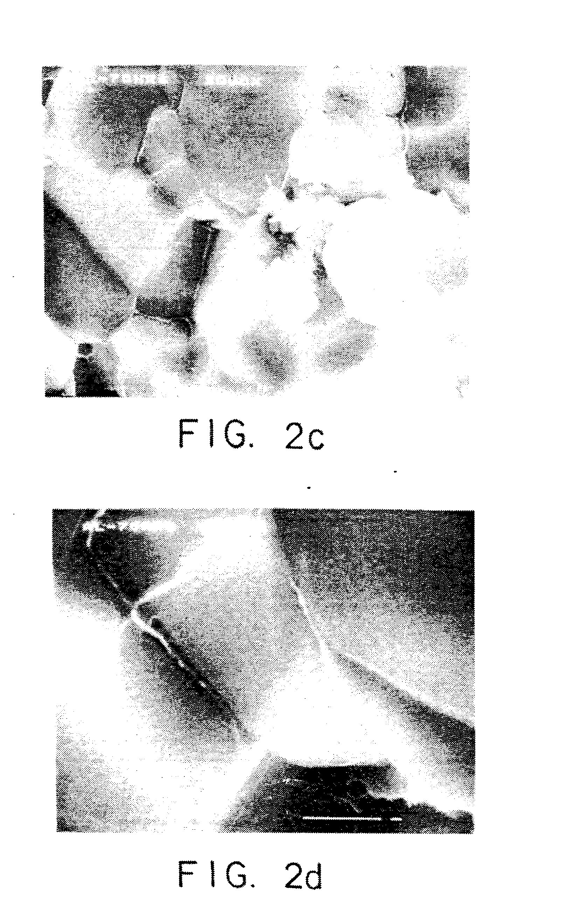

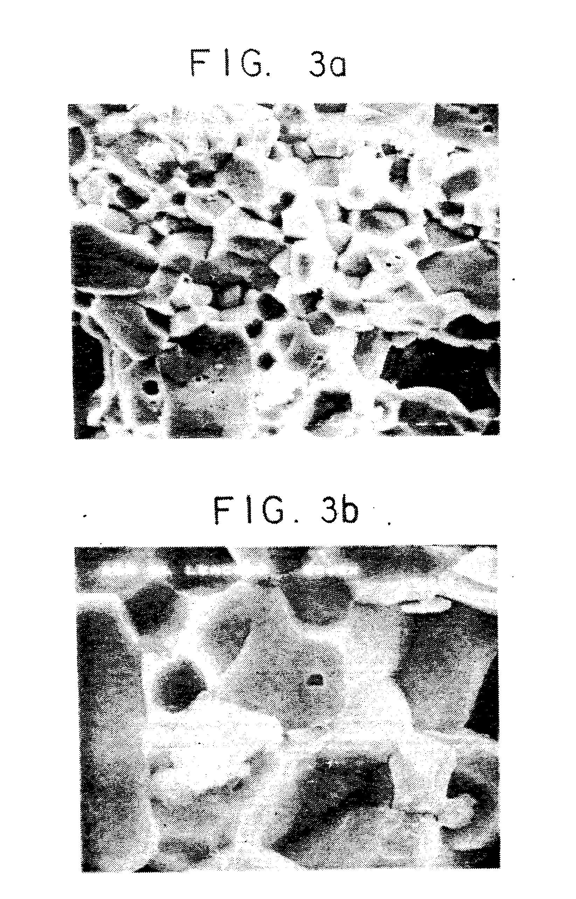

Electron microscopy was used on representative samples of the materials in Table III to try to detect aluminum. The photographs in Figs. 2a, 2b, 2c, and 2d show that aluminum concentrates at the grain boundaries between the $TiB_2$ particles, shown up as "fillets" between grains after 28 and 75 hours exposure. This aluminum remains although the sample was soaked in the hydrochloric acid solution, which removed only surface aluminum. The samples shown in Fig. 2 were not purified according to this invention. In contrast to Figs. 2a, 2b, 2c, and 2d, Figs. 3a, and 3b show no evidence of aluminum at the grain boundaries or elsewhere in the samples that were annealed in the BN pack after sintering. The aluminum has not penetrated from the molten bath in 100 hours of exposure.

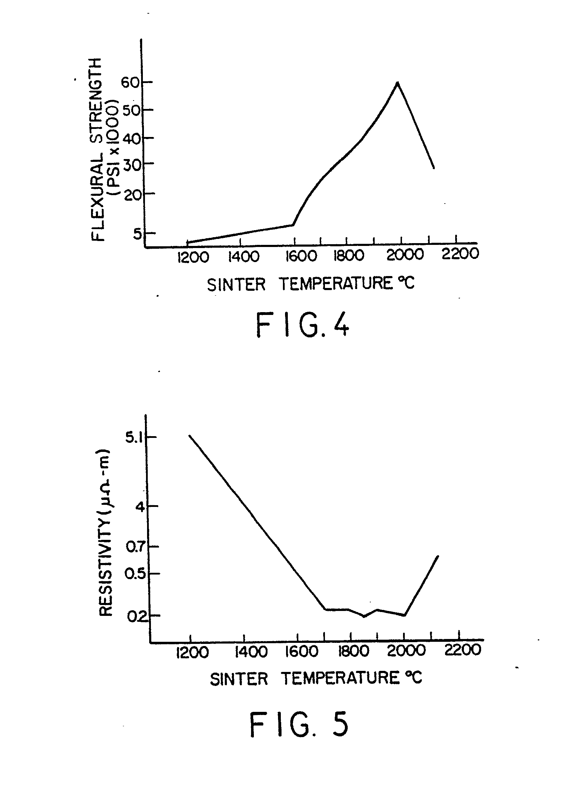

The graph of Fig. 4 shows that a sintering temperature of 2000°C±25°C is optimum. Higher temperatures cause drastic loss of strength and lower temperatures do not develop sufficient strength.

Electrical resistivity is another important variable in $TiB_2$ articles. Fig. 5 shows that the resistivity is minimum at the preferred sintering temperature of 2000°C. The use of higher temperatures is detrimental and results in drastically increased resistivity.

4

The article of the invention has been thoroughly tested under actual use conditions and has been found to be completely successful for the accomplishment of the above stated objects of the invention.

The practice of the invention hereinabove described will be evident to those skilled in the art to which it relates from a consideration of the foregoing.

It will thus be seen that there is provided an article in which the several objects of this invention are achieved, and which is well adapted to meet the conditions of practical use.

**Claims**

1. A method for making a shaped $TiB_2$ article essentially free of TiO, TiN and TiC cubic phase impurities comprising forming said article from finely divided $TiB_2$ containing at least one of said impurities and a sintering aid and sintering said article between about 1,600°C and about 2,100°C, characterized in that said sintered article is annealed in a BN pack between about 1,700°C and about 1,900°C thereby reacting said impurities with said pack so that essentially none of said impurities is present in said article after annealing.

2. The method of claim 1, characterized in that said sintering temperature is comprised between about 1,975°C and about 2,025°C.

3. The method of claim 1 or 2, characterized in that said article is formed by isostactic molding.

**Patentansprüche**

1. Verfahren zur Herstellung eines geformten $TiB_2$-Gegenstands, der im wesentlichen frei ist von TiO, TiN und TiC Verunreinigungen kubischer Phase, umfassend das Formen dieses Gegenstands aus feinzerteiltem $TiB_2$ enthaltend wenigstens eine dieser Verunreinigungen und ein Sinterhilfsmittel und Sintern dieses Gegenstandes zwischen etwa 1600°C und etwa 2100°C, dadurch gekennzeichnet, daß dieser gesinterte Gegenstand in einer BN-Packung zwischen etwa 1700°C und etwa 1900°C geglüht (vergütet) wird, wobei diese Verunreinigungen mit dieser Packung reagieren, so daß im wesentlichen keine dieser Verunreinigungen nach dem Glühen in diesem Gegenstand mehr anwesend ist.

2. Verfahren nach Anspruch 1, dadurch gekennzeichnet, daß diese Sintertemperatur zwischen etwa 1975°C und etwa 2025°C liegt.

3. Verfahren nach Anspruch 1 oder 2, dadurch gekennzeichnet, daß dieser Gegenstand durch isostatisches Pressen geformt wird.

**Revendications**

1. Procédé de production d'un article en $TiB_2$ façonné, pratiquement dépourvu d'impuretés en phase cubique TiO, TiN et TiC, consistant à produire ledit article à partir de $TiB_2$ finement divisé, contenant au moins l'une desdites impuretés, et d'un adjuvant de frittage, et à procéder au frittage dudit article à une température comprise dans l'intervalle d'environ 1600°C à environ 2100°C, caractérisé en ce que ledit article fritté est recuit dans un paquet de BN à une température comprise dans l'intervalle d'environ 1700°C à environ 1900°C, permettant de faire réagir ainsi lesdites impuretés avec ledit paquet de sorte que, pratiquement aucune desdites impuretées ne soit présente dans ledit article après recuisson.

2. Procédé suivant la revendication 1, caractérisé en ce que la température de frittage est comprise dans l'intervalle d'environ 1975°C à environ 2025°C.

3. Procédé suivant la revendication 1 ou 2, caractérisé en ce que l'article est formé par moulage isostatique.

97 w/o TiB$_2$ powder (~2.5 um $\phi$)
3 w/o CrB$_2$ powder (sintering aid)

↓

Blend

FIG. 1

↓

Add epoxy resin binder and catalyst
(ERL 3794 + triethanolamine) 3wt.%

↓

Isostatically mold

↓

Sinter at 2000°C ± 25°C in TiB$_2$ pack
In Argon atmosphere

↓                                    optional

Anneal in BN pack in Argon atmosphere
at 1800°C

↓

PURIFIED
PRODUCT                              PRODUCT

1

# FIG. 2a

# FIG. 2b

FIG. 2c

FIG. 2d

# F I G. 3a

# F I G. 3b

4

FIG. 4

FIG. 5